# EUROPEAN PATENT APPLICATION

(11) **EP 2 966 401 A1**
(43) Date of publication of application: **13.01.2016**
(21) Application number: 14760754.3
(22) Date of filing: 24.01.2014
(51) Int. Cl.: G01B 11/24

(54) **SHAPE EXAMINATION METHOD AND DEVICE THEREFOR**

(30) Priority: 05.03.2013 JP 2013042494
(71) Applicant: Hitachi, Ltd., Chiyoda-ku Tokyo 100-8280 (JP)
(72) Inventor: TANIGUCHI, Atsushi, Tokyo 100-8280 (JP); SAKAI, Kaoru, Tokyo 100-8280 (JP)
(74) Representative: Calderbank, Thomas Roger
(86) International application number: PCT/JP2014/051441
(87) International publication number: WO 2014/136490

(57) **Abstract**

The purpose of the present invention is to provide a shape examination method and device that are capable of measuring, stably and with high precision, complicated three-dimensional shapes. In order to solve this problem, the present invention provides a shape examination device comprising: a three-dimensional shape sensor that obtains shape data for an examination target; a path setting unit that uses reference data indicating the examination target shape data, and sets a path which passes through the relative position of the three-dimensional shape sensor relative to the examination target during examination; and a drive unit that controls the relative position of the three-dimensional shape sensor relative to the examination target.

## Description

### TECHNICAL FIELD

The present invention relates to a shape inspection method and an inspection apparatus therefor.

### BACKGROUND ART

In order to secure quality of products during working and assembling in manufacturing, working tools and inspection techniques of shape/surface states of products are required that are capable of feedback to a quantitative manufacturing process less susceptible to skills of a visual inspector. However, inspection objects may have complicated shapes in many cases and it may be difficult to perform an automatic inspection.

In Patent Literature 1, proposed is a method for performing three-dimensional shape measurement having excellent accuracy by adjusting a laser light amount so that a reflected light amount is fixed even when a color or a shade is added to a three-dimensional shape, in three-dimensional shape measurement capable of performing three-dimensional shape measurement in a wide range on the basis of a light-section method by scanning a laser beam.

In Patent Literature 2, a three-dimensional shape measuring apparatus is described that is configured by including a supporting device on which an inspection object is mounted, an image pickup device that illuminates the inspection object mounted on the supporting device, receives light from the inspection object, and images the inspection object, a measurement processing unit that measures the inspection object on the basis of an image of the inspection object imaged by the image pickup device, a moving mechanism that supports the supporting device and the image pickup device such that at least three relative movements among relative rotation movements around three axes perpendicular to one another and relative horizontal movements in the three axis directions are possible, and a drive control device that controls the supporting device and the image pickup device to move relative to each other; further, the drive control device has a first operation control mode for performing the relative movement control of the image pickup device and the supporting device in order to scan an imaging part on the inspection object by the image pickup device, and a second operation control mode for performing the relative movement control of the image pickup device and the supporting device by maintaining a state in which the image pickup device can image the imaging part.

### CITATION LIST

### PATENT LITERATURE

Patent Literature 1: JP-A-2009-204425
Patent Literature 2: JP-A-2010-216939

### SUMMARY OF INVENTION

### TECHNICAL PROBLEM

In Patent Literature 1, control of a relative position between an inspection object and an irradiation laser beam is not considered. Therefore, measurement accuracy in the light-section method is different due to the irradiation laser beam and an inclination of a surface as well as reflection characteristics of the surface in the inspection object, and as a result complicated shapes cannot be stably measured.

Further, in Patent Literature 2, the three-dimensional shape measuring apparatus has a mechanism capable of controlling a relative position between the supporting device and the image pickup device of the inspection object in order to secure measurement accuracy. However, it is difficult to control the relative position so that the relative position between the supporting device and the image pickup device is measured stably and with high accuracy on the basis of measurement characteristics of the image pickup device. Further, it takes time to teach a control method and a variation occurs in the measurement accuracy depending on a worker that performs the teaching.

To cope with problems, in view of the foregoing, it is an object of the present invention to provide a shape inspection method and apparatus that are capable of measuring, stably and with high accuracy, complicated three-dimensional shapes.

### SOLUTION TO PROBLEM

To solve the foregoing problems, according to one aspect of the present invention, provided is a shape inspection apparatus comprising a three-dimensional shape sensor that obtains shape data of an inspection target, a path setting unit that sets a path through which a relative position of the three-dimensional shape sensor relative to the inspection target passes during inspection by using reference data representing the shape data of the inspection target, and a driving unit that controls the relative position of the three-dimensional shape sensor relative to the inspection target.

Further, according to another aspect of the present invention, provided is a shape inspection method comprising setting, by using reference data representing shape data of an inspection target, a path through which a relative position of a three-dimensional shape sensor relative to the inspection target passes during inspection, controlling the relative position of the three-dimensional shape sensor relative to the inspection target so as to pass through the set path, and obtaining the shape data of the inspection target by the three-dimensional shape sensor.

### ADVANTAGEOUS EFFECTS OF INVENTION

According to the present invention, it is possible to provide the shape inspection method and apparatus that are capable of measuring, stably and with high accuracy, complicated three-dimensional shapes.

### BRIEF DESCRIPTION OF DRAWINGS

[FIG. 1] FIG. 1 is a block diagram illustrating a configuration of a three-dimensional shape inspection apparatus according to a first embodiment of the present invention;
[FIG. 2] FIG. 2 is a flow diagram illustrating an inspection procedure by a distance measuring sensor according to the first embodiment of the present invention;
[FIG. 3] FIG. 3 is a flow diagram illustrating a path setting procedure according to the first embodiment of the present invention;
[FIG. 4] FIG. 4 is a schematic diagram illustrating a geometric relationship between an inspection object and laser irradiated from the distance measuring sensor according to the first embodiment of the present invention;
[FIG. 5] FIG. 5 is a schematic diagram illustrating accuracy characteristics of the distance measuring sensor according to the first embodiment of the present invention;
[FIG. 6] FIG. 6 is a schematic diagram illustrating a geometric relationship between a mesh and the distance measuring sensor at the time of a plurality of times of measurement according to the first embodiment of the present invention;
[FIG. 7] FIG. 7 is a flow diagram illustrating a procedure for calculating a cover rate according to the first embodiment of the present invention;
[FIG. 8] FIG. 8 is a flow diagram illustrating a path setting procedure in consideration of a duplication rate according to the first embodiment of the present invention;
[FIG. 9] FIG. 9 is a schematic diagram illustrating a GUI according to the first embodiment of the present invention;
[FIG. 10] FIG. 10 is a block diagram illustrating a configuration of a three-dimensional shape inspection apparatus according to a second embodiment of the present invention;
[FIG. 11] FIG. 11 is a flow diagram illustrating an inspection procedure by the distance measuring sensor according to the second embodiment of the present invention;
[FIG. 12] FIG. 12 is a flow diagram illustrating a procedure for recognizing an edge part according to the second embodiment of the present invention; and
[FIG. 13] FIG. 13 is a schematic diagram illustrating a calculation area of the edge part according to the second embodiment of the present invention.

### DESCRIPTION OF THE EMBODIMENTS

### First Embodiment

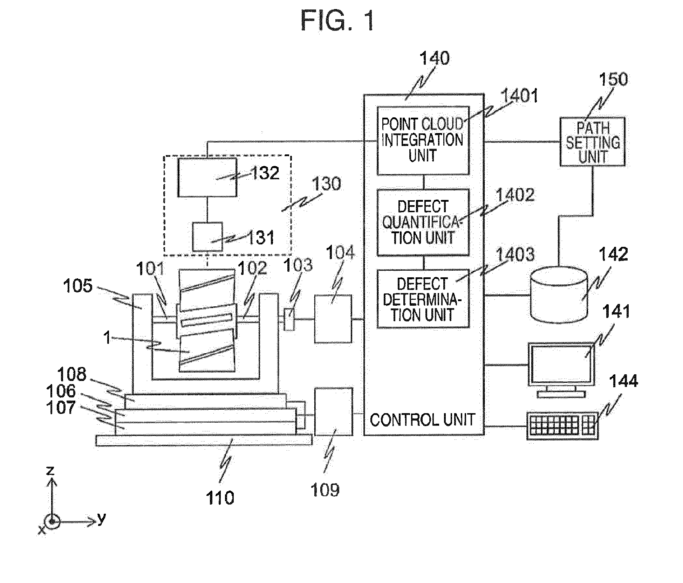

A first embodiment of the present invention will be described with reference to FIGS. 1 to 10.

In FIG. 1, a configuration of a three-dimensional measuring apparatus is illustrated. Inspection object 1 being an inspection target is held by holding mechanisms 101 and 102. Here, all of inspection object 1 and holding mechanisms 101 and 102 are connected to servomotor 103, and have a rolling mechanism centering on a y axis on an x-z plane. Here, holding mechanisms 101 and 102 have a reasonable holding power that causes no deviation between a rotated amount of servomotor 103 and that of inspection object 1. Here, a relative position between inspection object 1 and distance measuring unit 130 has to be arranged in consideration of characteristics of distance measuring unit 130 so that an inspection cover rate (=an inspection available area/the entire area of the inspection object) becomes large, namely, an inspection area becomes wider. Descriptions will be made in detail below; in the present embodiment, an inspection path through which the relative position of distance measuring unit 130 relative to inspection object 1 passes at the time of the inspection is set by path setting unit 150. In addition, inspection object 1 is processed goods in which quality needs to be secured by three-dimensional shape measurement, a working tool in which shape measurement is necessary for a process accuracy management, or the like.

Further, all of inspection object 1, holding mechanisms 101 and 102, and servomotor 103 are held by base 105, and base 105 is mounted on x stage 106, y stage 107, and goniostage 108. A rotation direction of goniostage 108 is within a y-z plane, and an axis of rotation is in a direction of an x axis. X stage 106, y stage 107, goniostage 108, and base 105 are mounted on vibration isolation surface plate 110. By using a PC for control 140, operations of servomotor 103 are controlled via a motor controller 104, and operations of three of x stage 106, y stage 107, and goniostage 108 are controlled via stage controller 109 of three axes.

In the three-dimensional measuring apparatus illustrated in FIG. 1, a three-dimensional shape (surface state) of inspection object 1 is measured by distance measuring unit 130 serving as a three-dimensional shape sensor, and three-dimensional shape data is obtained. Distance measuring unit 130 includes non-contact distance measuring sensor 131 and sensor controller 132, and is controlled in synchronization of each stage serving as a driving unit in which the relative position of distance measuring unit 130 relative to inspection object 1 is controlled by the PC for control 140; measurement results are output to monitor 141. Non-contact distance measuring sensor 131 is, for example, a distance measuring sensor that measures a point cloud of inspection object 1 by irradiation of laser, and measures a distance between an object surface and non-contact distance measuring sensor 131. Postures of inspection object 1 and distance measuring sensor 131 are determined by x stage 106 and goniostage 108, and a distance between distance measuring sensor 131 and inspection object 1 is measured while scanning y stage 107 and servomotor 103; further, a point cloud in a three-dimensional coordinate system is obtained in consideration of a stage coordinate system. With regard to non-contact distance measuring sensor 131, a lot of methods are proposed and any of the methods are applicable to the present embodiment. Examples include a light-section method based on a trigonometrical survey, a TOF (Time Of Flight) method in which a distance is measured by a time in which light is irradiated on an object and is returned, an interference method using a white light interference, conoscopic holography using application of polarization interference, and the like. Further, a distance measuring method using an optical frequency comb having a number of optical frequency modes that are arranged at equal intervals in a frequency space, or a distance measuring method using frequency feedback laser is also applicable thereto. Among the above methods, a measurement method is selected that is appropriate for a size, a shape, and a surface state (reflectivity and roughness) of inspection object 1.

Control unit 140 performs synchronization control of each stage and distance measuring unit 130 and measures point clouds, and integrates a lot of point clouds as one shape data by point cloud integration unit 1401. By defect quantification unit 1402, control unit 140 calculates a difference between the shape data and reference shape data 142 representing a design shape or an ideal shape, such as CAD (Computer Aided Design) data, and quantifies the above difference. Further, by defect determination unit 1403, control unit 140 performs threshold processing and determines whether or not a defect occurs.

Hereinafter, a three-dimensional shape measurement/inspection method having an optimization function on the relative position between the inspection object and the distance measuring sensor in the present embodiment will be described in detail.

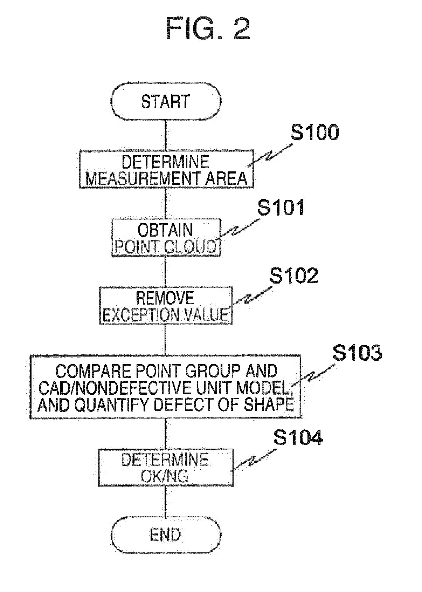

An inspection flow is illustrated in FIG. 2. A measurement area is determined by path setting unit 150 on the basis of performances of distance measuring unit 130 to be applied (S100), a point cloud representing coordinates in a 3D space is obtained by distance measuring unit 130 while performing stage control of inspection object 1 to the measurement area determined at S100 (S101), and an exception value is removed due to a measurement error of distance measuring unit 130 included in the measured point cloud (S102). Measurement shape data obtained at S102 and CAD data, or nondefective unit shape data in which a nondefective unit is measured in the same process as those of S100 to S102 are compared and a shape defect of the measurement shape data is quantified (S103), a threshold is provided, and determination of OK/NG is performed (S104).

Hereinafter, each step will be described in detail.

### (S100)

Depending on distance measuring sensor 131 to be used, distance measuring unit 130 differs in characteristics thereof. In a noncontact technique using light, reflected light or diffused light from inspection object 1 is generally used, and therefore measurement accuracy is changed in accordance with an inclination degree of a laser beam irradiated from distance measuring sensor 131 and a measurement spot of inspection object 1. In path setting unit 150, an optimum value for control on the relative position between path setting unit 150 and inspection object 1 is derived in accordance with the measurement accuracy of distance measuring sensor 131 on the basis of shape information to be measured of the CAD data etc. Details of path setting unit 150 will be described below.

### (S101)

The relative position between inspection object 1 and distance measuring unit 130 is controlled by servomotor 103, x stage 106, y stage 107, and goniostage 108. Each stage is controlled so as to cover a measurement area of inspection object 1, and the point cloud representing the coordinates in the 3D space is obtained. The postures are determined by x stage 106 and goniostage 108, and servomotor 103 and y stage 107 are scanned. By distance measuring unit 130, a distance between a surface of inspection object 1 and distance measuring unit 130 is measured, and therefore the distance is converted into the coordinates of the 3D space by positional information of each stage.

### (S102)

In the point clouds measured by distance measuring unit 130, an exception value is generated due to the measurement error of distance measuring unit 130. The above exception value is generally removed for statistical properties of the measured point clouds. For example, differences in positions of the point clouds that are densely packed in a certain noted range are indicated by standard deviation, and processing is considered in which a point from which a distance of N times the standard deviation is separated is set to be an exception value.

### (S103)

The point cloud and the CAD data are compared, and defect of shape is quantified. Further, in the case in which the CAD data is not present, the point cloud is compared with nondefective unit shape data in which a nondefective unit is digitalized by procedures of S100 to S103, and the defect of shape can be quantified. Further, in the case in which the point cloud obtained at S102 is compared with the CAD data or the like, the point cloud may be converted into mesh data having normal information. As a conversion method, a Ball-Pivoting method, a Power Crust method, or the like can be used.

### (S104)

A threshold is previously set to a defect-of-shape value quantified at S103, and an OK/NG determination is automatically performed in which the threshold or less is set to be OK and the threshold or more is set to be NG. The threshold represents deviation from an ideal value or a design value of inspection object 1 and a user arbitrarily sets the threshold as usage.

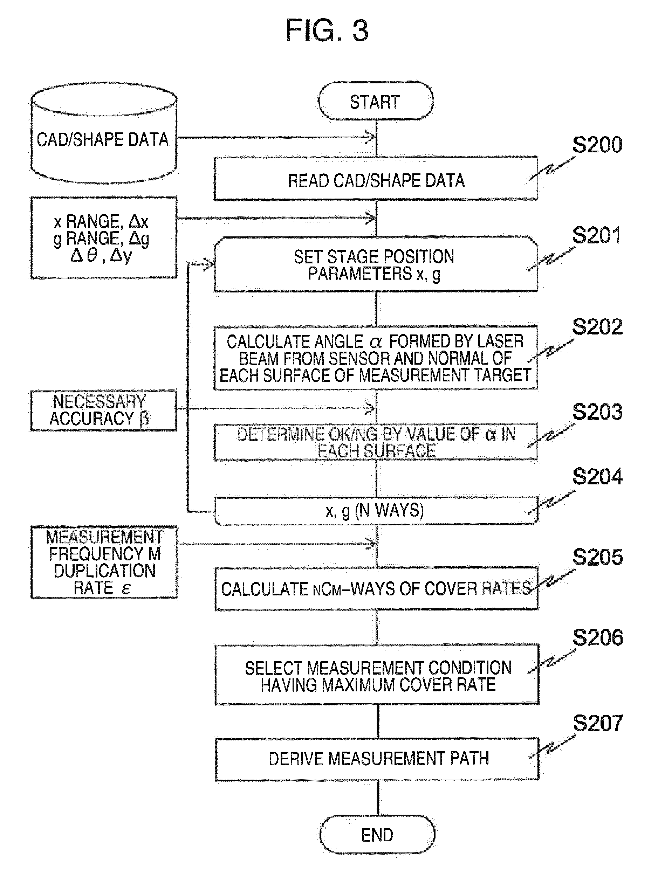

Hereinafter, details of path setting unit 150 will be described. By using measurement accuracy characteristics of distance measuring sensor 131 and reference data representing a shape of inspection object 1 such as the CAD data previously prepared or the shape data previously obtained in the path setting unit, an appropriate setting value on the relative position between distance measuring sensor 131 and inspection object 1 is derived. The measurement accuracy characteristics indicate the accuracy dependence according to a distance between inspection object 1 and distance measuring sensor 131 or the like, such as the accuracy dependence of an angle formed by a measurement surface of inspection object 1 and a laser beam irradiated from distance measuring sensor 131, the accuracy dependence of amount of light that is reflected by inspection object 1 and is returned to distance measuring sensor 131, and the accuracy dependence of plane roughness of inspection object 1. In the present embodiment, a calculation procedure is illustrated in FIG. 3 in the case in which the accuracy dependence of an angle formed by a laser beam irradiated from distance measuring sensor 131 and the measurement surface of inspection object 1 is taken as an example.

### (S200)

The CAD data or the shape data measured separately of inspection object 1 is read. A format includes a CAD format, a mesh format, a point cloud format, and the like.

### (S201)

A shape measuring apparatus illustrated in FIG. 1 includes servomotor 103, x stage 106, y stage 107, and goniostage 108 as a movable portion. In x stage 106 and goniostage 108, initial positions of inspection object 1 and distance measuring sensor 131 are determined, and a distance between inspection object 1 and a laser beam irradiated from distance measuring sensor 131 is calculated while changing a rotation angle θ of servomotor 103 and a position y of y stage 107.

At this time, a movable range and an interval Δx of x stage 106 as well as a movable range and an interval Δg of goniostage 108 at the time of setting conditions are input. In these values, in consideration of a size of the shape data input at S200, the movable ranges of the x stage and the goniostage may be automatically set so that the entire measurement can be performed, and the intervals Δx and Δg may be set automatically depending on performances of the stages mounted on the actual apparatus. Further, as the intervals are shorter, calculation conditions are increased more and a calculation time is required more hugely; therefore, the intervals Δx and Δg can be determined in consideration of the calculation time. Further, resolutions Δθ and Δy of θ and y at the time of the calculation are also input. Note, however, that the resolution may be determined automatically, such as the resolution is calculated in the same level as in a spatial resolution of the shape data input at S200, or the resolution is calculated by multiplying the spatial resolution by a certain coefficient. In addition, the number of the point clouds obtained at the time of the calculation is determined depending on the resolutions of θ and y. The number of combinations of x stage 106 and goniostage 108 capable of appropriately measuring the entire shape of inspection object 1, and the combinations thereof are determined. Since appropriate combinations are required, the movable range and the interval are given to x stage 106 and goniostage 108, and calculations of S202 are performed below in respective positions.

### (S202)

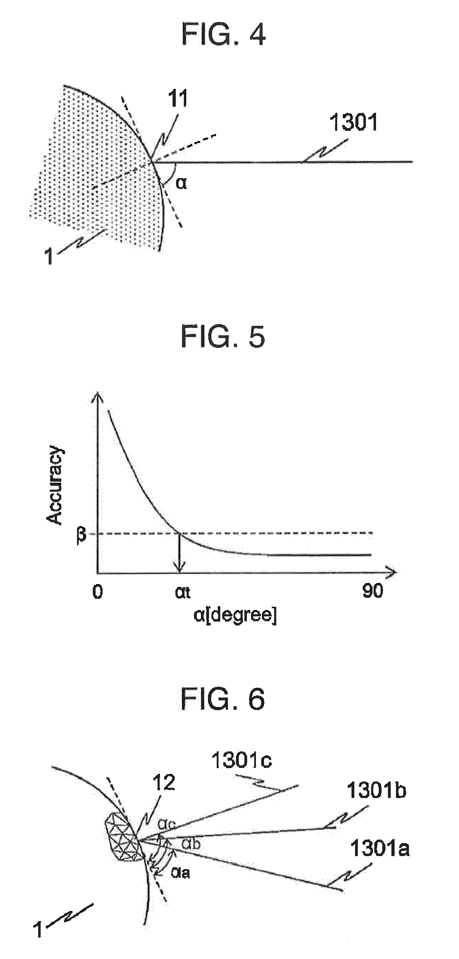

Next, an angle formed by inspection object 1 and a laser beam irradiated from the distance measuring sensor is derived in each local area of the shape data read at S200. In general, the performances of the optical distance measuring sensor 131 largely depend on an angle α formed by inspection object 1 and a laser beam irradiated from distance measuring sensor 131. Here, the angle α is used as an index indicating the measurement accuracy. The angle α formed by inspection object 1 and a laser beam irradiated from distance measuring sensor 131 can be calculated mechanically when a position of each stage is determined. When a certain stage position is set, a spot in which an irradiation laser beam 1301 irradiated from distance measuring sensor 131 is radiated on inspection object 1 is a measurement point 11 as illustrated in FIG. 4, and the angle α formed by the measurement point 11 and the irradiation laser beam 1301 can be calculated. An actual calculation method of α is different depending on the format of data input at S200. In the case of the CAD data, each stage is scanned by the resolution set at S201, a surrounding surface direction is estimated in the spot in which a laser beam is irradiated on inspection object 1, and α is calculated. In the surface direction, an area below the resolution is selected in the vicinity of the spot on which a laser beam is irradiated, and a main surface direction is detected by a main component analysis or the like. In the case of the mesh data, since each mesh holds the normal information, α can be calculated in each mesh. The resolution of the stage is also set on the basis of the resolution of the mesh. When the mesh has a high resolution more than needs, one of α can be calculated by a plurality of the meshes. In the case of data on the point cloud, α can be calculated in each point cloud. When a certain point is taken notice of, a surface direction is derived from a surrounding point cloud thereof by the main component analysis or the like, and α is calculated. A minimum spatial resolution is determined by an interval of the point clouds.

### (S203)

A threshold αt is provided for α in each surface calculated at S202, and a determination is performed in which the threshold or more is set to be OK and the threshold or less is set to be NG. The threshold αt is determined by characteristics of distance measuring sensor 131 and is derived from a relationship between an inclination of the surface and accuracy necessary for the measurement. A relationship between the accuracy necessary for the measurement and the inclination α of the surface is illustrated in FIG. 5. As the inclination α of the surface is smaller, the accuracy β necessary for the measurement is higher as illustrated in FIG. 5. When the accuracy β necessary for the measurement is given, the threshold αt of the inclination of the surface necessary at the time of the measurement is uniquely determined and the inclination α of the surface is equal to or more than the threshold αt and satisfies the accuracy β necessary for the measurement. The determination based on the threshold αt is performed to all surfaces included in the shape data. Thereby, the determination based on the threshold αt having predetermined accuracy β or more necessary for the measurement can be performed.

### (S204)

When x stage 106 and goniostage 108 are set at S202 and S203, an angle formed by each surface configuring the shape data representing inspection object 1 and distance measuring sensor 131 is calculated and the OK/NG determination based on the threshold processing is performed. A calculation of S202 and S203 is repeated as much as the number of the combinations N of respective positions x and g of x stage 106 and goniostage 108 to be assumed.

### (S205)

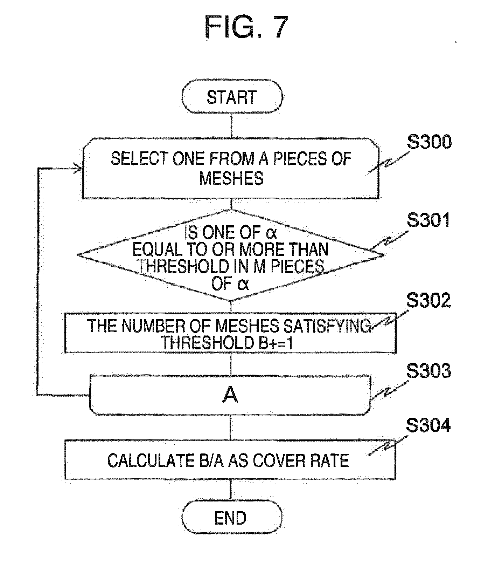

The number of times of the measurement M is specified and appropriate combinations of M times are selected from among N-ways of measurement conditions. In the case in which the shape data is mesh data, descriptions will be made. As illustrated in FIG. 6, in an intended mesh 12, a laser beam of distance measuring sensor 131 is irradiated from N-ways of directions determined by the combinations of x stage 106 and goniostage 108 considered at S204. For example, an angle formed by an irradiation laser beam 1301a and a surface is αa under a certain condition. Similarly, an angle formed by an irradiation laser beam 1301b and the surface is αb, an angle formed by an irradiation laser beam 1301c and the surface is αc, and αa<αb<αc<90° is obtained. Here, when the threshold is αa<αt<αc, the determination of OK is performed only in the case of the irradiation laser beam 1301c. Here, a cover rate is used as an index of the selection in the combinations. When the number of the meshes is set as A and the number of the meshes in the determination of OK is set as B, the cover rate is defined as B/A. A calculation flow is illustrated in FIG. 7. M pieces of measurement conditions are selected from the N-ways of measurement conditions, and (S300) one mesh is selected from A pieces of meshes; (S301) when even one mesh is equal to or more than the threshold in M-ways of α, the mesh is counted as a measurable mesh, and (S302) one is added to B (an initial value of B is set as zero). (S303) S302 is repeated as much as the number of the meshes A, and (S304) B/A is calculated.

### (S206)

S205 is performed to all the combinations of NCM, and the measurement condition having a highest cover rate is selected as an optimum value. In addition, the measurement condition having the highest cover rate is not selected, but one of the measurement conditions more than a predetermined cover rate may be selected.

### (S207)

The measurement condition is determined at S206, an order for measurement needs to be also determined in the case of actual measurement, and a measurement path needs to be set. M-ways of measurements are put in an appropriate order, and therefore optimization is performed, such as the measurement time is minimized and the measurement path (the moving amount of the relative position of distance measuring unit 130 relative to inspection object 1) is minimized. In addition, all the M-ways of measurements are not performed, but the measurement time is calculated about the predetermined number of paths, and the measurement time may be shortened so as to be minimized in the measurement time.

Hereinafter, an embodiment in the case of minimizing the measurement time will be described. With regard to M-ways of measurement positions, positions of x stage 106 are set as xi, positions of the goniostage are set as gi, and i=1, 2, 3, ...M is set. An order of i is determined so that the measurement time is minimized. When the moving amount is set as Sxi(=|xi-xi+1|), acceleration is set as ax, deceleration is set as ax', and velocity is set as vx at the time in which x stage 106 moves from a status i to a status i+1, a time required for movement can be described as Txi=Sxi/vx+0.5vx(1/ax+1/ax'). Similarly, when the moving amount of the goniostage is set as Sgi(=|gi-gi+1|), acceleration is set as ag, deceleration is set as gx', and velocity is set as vg, a time required for movement can be described as Tgi=Sgi/vg+0.5vg(1/ag+1/ag'). An order of i in which E=∑(Txi+Tgi) is minimized is derived by an optimized calculation, and thereby a shortest path is derived. In the above calculation, a portion in which movement is performed at a fixed velocity is supposed to be present, and when a smaller velocity of acceleration/deceleration is set as a, |v2/a|>S is supposed to hold. Thereby, the measurement time of inspection object 1 by distance measuring unit 130 can be shortened.

The point cloud measured as described above is compared with a design shape in CAD or the like, or an ideal shape. In the present embodiment, each position of x stage 106 and goniostage 108 is set as a parameter, and the measurement is performed more than once. When the point cloud is compared with the CAD or the like, two methods are considered in which data is separately compared more than once, or data is integrated and compared. In the case in which a rough shape can be grasped in a single measurement, the point cloud may be compared with individual data. On the other hand, in the case in which an area that can be measured once is short because of a complicated shape of inspection object 1, the data may be integrated and compared.

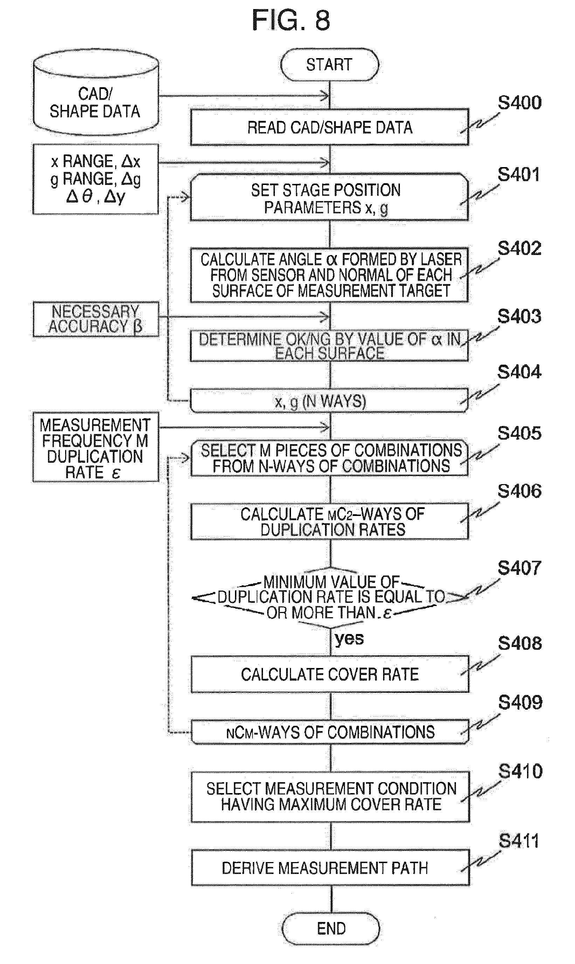

Here, a method for integrating, by point cloud integration unit 1401, a plurality of measurement data obtained by distance measuring sensor 131 through a path set by path setting unit 150 will be described. When operations of x stage 106 and goniostage 108 are accurately compensated so as not to affect the measurement accuracy, it is enough to convert a coordinate system moved on the stage in the integration of each data. In the case in which this compensation is insufficient, both the point cloud data after the measurement need to be aligned and integrated. To integrate both the point clouds, a method using as a base an ICP (Iterative Closest Point) algorithm is widely used. In this algorithm, an arrangement of both the point clouds is optimized so that consistency is most taken from a portion of overlap in a plurality of point clouds. Therefore, the portion of overlap is essential for each point cloud. In FIG. 8, an inspection path setting flow is illustrated in which the portion of overlap is also considered in a plurality of measurement. In the same portion as that of FIG. 3, descriptions will be saved, and S405 to S409 will be described. A duplication rate ε required at the time of the data integration is different depending on the shape data, and therefore a user sets an appropriate rate. The duplication rate may be automatically set while using as an index a surface direction indicating complexity of the shape. In addition, in the case in which input data is mesh data, the duplication rate is defined by overlapped meshes/all meshes.

A plurality of measurement data are integrated, and thereby measurement results having high accuracy can be obtained over the entire inspection area.

### (S405)

M-ways of combinations specified as the number of times of the measurement are selected from N-ways of combinations of x stage 106 and goniostage 108.

### (S406)

Two measurement conditions are selected from M-ways of measurement conditions, and the duplication rate is calculated. The duplication rate is calculated as much as MC2-ways of combinations of all the conditions.

### (S407)

A minimum value is calculated in the MC2-ways of duplication rates calculated at S406, and is compared with ε. If the minimum value is equal to or more than ε, subsequent calculations are continued; if the minimum value is equal to or less than ε, the combinations selected at S405 are not appropriate for the measurement conditions and further calculations are not performed.

### (S408)

A cover rate is calculated to the combination in which the minimum value of the duplication rate is determined to be equal to or more than ε at S407.

### (S409)

S405 to S408 are performed as much as NCM-ways of combinations. Up to here, a method for fixing the number of times of the measurement M and calculating the cover rate is described; further, the threshold is provided in the cover rate, and the number of times of the measurement M satisfying the threshold can be calculated. In this case, until the cover rate is equal to or more than the threshold, it is enough to repeat the calculation of a path derivation flow illustrated in FIG. 8 while increasing M.

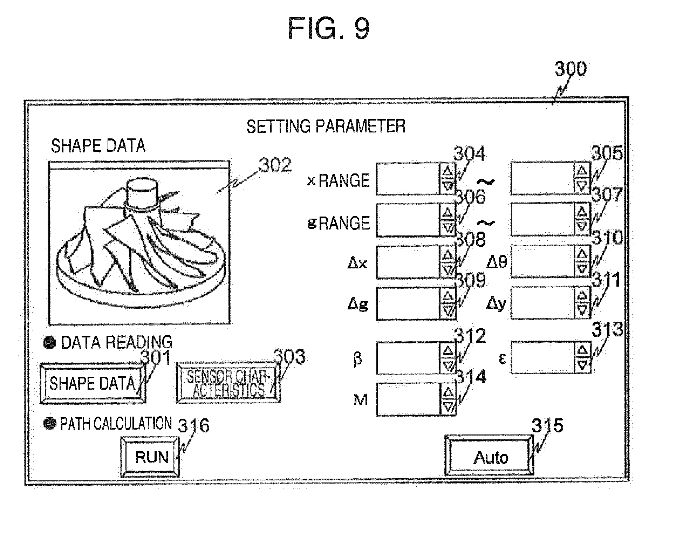

An example of a GUI (Graphical User Interface) that operates a measurement path setting unit described above is illustrated in FIG. 9. The GUI 300 is opened, the shape data is read by a shape data button 301 in the beginning, and is displayed on a display window 302. Further, sensor characteristics (information about the accuracy and the inclination of the surface) to be used are read by a sensor characteristics button 303. Next, parameters necessary for path setting are input. The movable range to search paths of x stage 106 is input to an x minimum box 304 and an x maximum box 305. With regard to goniostage 108, the movable range to search paths of goniostage 108 is similarly input to a g minimum box 306 and a g maximum box 307. Further, resolutions of x, y, the goniostage, and the servomotor are input to resolution boxes 308 to 311. The measurement accuracy β is input to an accuracy input box 312, the duplication rate ε is input to a duplication rate input box 313, and the number of times of the measurement M is input to a measurement frequency input box 314. In addition, estimate values can be derived from advance information for the parameters related to the stages and they can be automatically input by an AUTO button 315. After the parameters are set, paths are calculated by a path calculation button 316 and the measurement paths are displayed on the window.

From the above, according to the present embodiment, an inspection path through which the relative position of distance measuring unit 130 relative to inspection object 1 passes at the time of the inspection is set by path setting unit 150; thereby, a variation of the measurement accuracy is prevented from occurring depending on a worker and a complicated three-dimensional shape can be measured stably.

### Second Embodiment

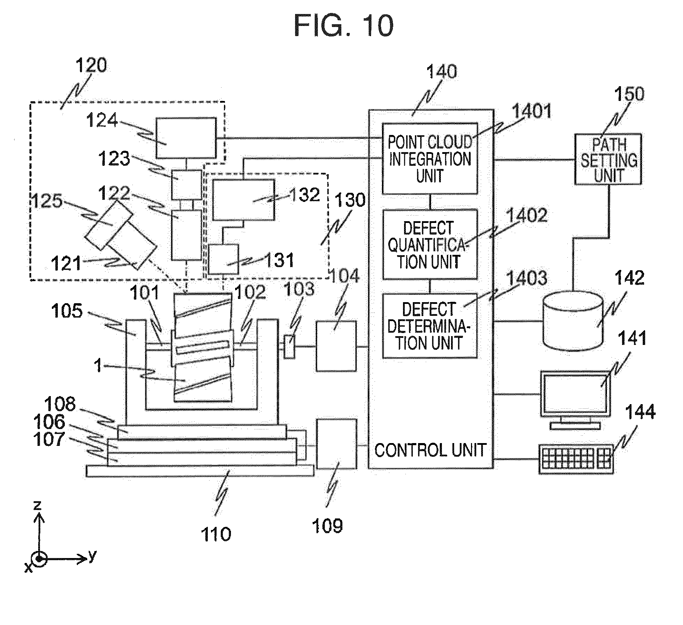

A second embodiment of the present invention will be described with reference to FIGS. 10 to 13.

A configuration is illustrated in FIG. 10. In comparison with FIG. 1, an image pickup unit 120 is added. In the present embodiment, a measurement path optimization will be described in the case of using a shape measuring apparatus in which two types of sensors having characteristics different from each other of distance measuring unit 130 and the image pickup unit 120 are used. In a three-dimensional measuring apparatus illustrated in FIG. 10, a surface state and a shape of inspection object 1 are measured by the image pickup unit 120 and distance measuring unit 130. In the image pickup unit 120, inspection object 1 is illuminated from an arbitrary direction by an illumination unit 121, reflected light, scattered light, diffracted light, and diffused light thereof are imaged through a lens 122 by a two-dimensional camera 123, and three-dimensional shapes are obtained as two-dimensional image data. A lamp, an LED (Light Emitting Diode), or the like can be used as the illumination unit 121, and illumination from a single direction is illustrated in FIG. 10; further, an illumination direction may be a plurality of directions and a ring-shaped illumination may be used. Further, also in the case in which illumination is performed from a single direction, the illumination unit 121 has a structure capable of freely setting an illumination direction and can irradiate illumination light in accordance with a surface state and a shape of inspection object 1 from a direction in which surface irregularity and a shape are actualized. For the two-dimensional camera 123, a CCD (Charge Coupled Device) image sensor, a CMOS (Complementary Metal Oxide Semiconductor) image sensor, or the like can be used. The two-dimensional camera 123 is controlled by the PC for control 140 via a camera controller 124, and measurement results are output to monitor 141. In addition, an internal parameter indicating an image distortion etc. of the two-dimensional camera 123 and a coordinate relationship between the two-dimensional camera 123 and distance measuring unit 130 are supposed to be previously calibrated.

As a method for obtaining shapes from images imaged by the two-dimensional camera 123, a stereo method based on a trigonometrical survey, a lens focus method in which a distance is measured by moving a focus of a lens and focusing the lens on an object, a moire method in which a grating pattern is projected on an object and a shape is measured from a pattern deformed in accordance with a shape on an object surface, or the like is used. Further, as a method for detecting a surface irregularity, a photometric stereo in which a difference in a shade due to an illumination direction is used and a direction of a normal vector of a surface on a target object is estimated, or the like is used.

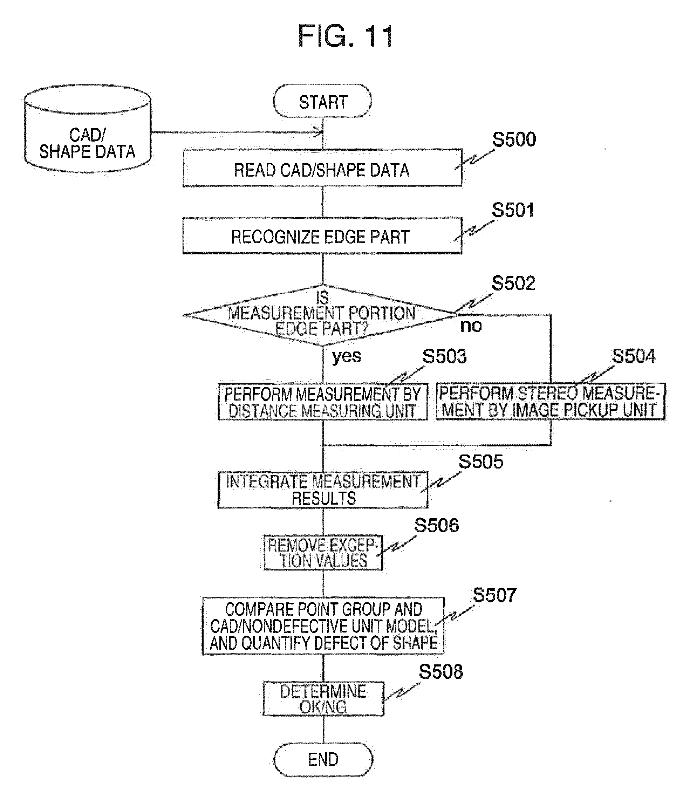

Hereinafter, a case of using the stereo method in which distance measuring sensor 131 and a difference between viewpoints of a plurality of images are used and a three-dimensional shape is restored will be described in detail. The stereo method is appropriate for a shape measurement of an edge part in which a change in light and darkness is largely indicated as compared to a surrounding area in an image. Therefore, the edge part is measured by the image pickup unit 120 and a smooth surface is measured by distance measuring unit 130, and thereby a stable measurement/inspection is realized. In FIG. 11, a measurement flow is illustrated.

### (S500)

The CAD data or the shape data separately measured of inspection object 1 is read. A format includes a CAD format, a mesh format, and a point cloud format.

### (S501)

The edge part is recognized from the shape data read at S500. Details of a recognition method of the edge part will be described below.

### (S502)

On the basis of the determination whether the measurement unit is the edge unit or not, the measurement is performed by the image pickup unit 120 or distance measuring unit 130.

### (S503)

In the case in which the measurement unit is not the edge part, the measurement is performed by distance measuring unit 130. With respect to a non-edge part in which the edge part is excluded, the measurement path is determined by path setting unit 150 through a method illustrated in FIG. 3 or 8, and then the measurement is performed.

### (S504)

With regard to the edge part, a stereo measurement is performed by the image pickup unit 120. At this time, a camera is set and fixed so as to be focused on a position of the measurement object, and a parallax error caused by rotation of inspection object 1 due to servomotor 103 is used.

### (S505)

The point clouds measured at S503 and S504 are integrated by conversion of the coordinate system. In distance measuring unit 130 and the image pickup unit 120, a portion of overlap is short at points to be measured due to characteristics thereof, and it is difficult to integrate the point clouds by a method such as an ICP algorithm.

### (S506)

In the point clouds measured by distance measuring unit 130 and the image pickup unit 120, exception values are included due to respective measurement errors. The above exception values are generally removed by a statistical property of the measurement point cloud. For example, processing is considered in which a difference in positions of the point clouds that are densely packed within a certain noted range is indicated by the standard deviation, a point from which a distance of N times the standard deviation is separated is set to be the exception value, or the like.

### (S507)

The point cloud and the CAD data are compared and the defect of shape is quantified. Further, in the case in which the CAD data is not present, the point cloud is compared with the nondefective unit shape data in which the nondefective unit is digitalized by procedures of S500 to S506, and the defect of shape can be quantified. Further, in the case in which the point cloud obtained at S 102 is compared with the CAD data or the like, the point cloud may be converted into mesh data having the normal information. As the conversion method, the Ball-Pivoting method, the Power Crust method, or the like can be used.

### (S508)

A threshold is previously set to the defect-of-shape value quantified at S103, and the OK/NG determination is automatically performed in which the threshold or less is set to be OK and the threshold or more is set to be NG. The threshold represents deviation from an ideal value or a design value of inspection object 1 and a user arbitrarily sets the threshold as usage.

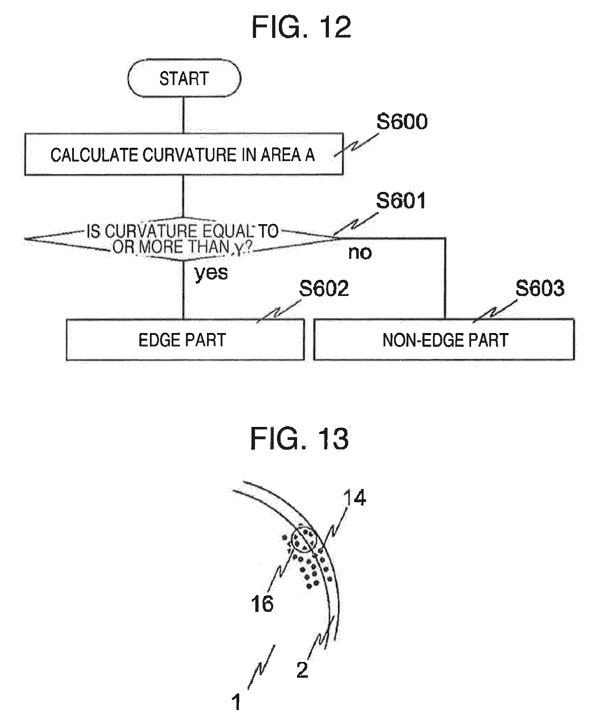

Next, the recognition method of the edge part will be described. In FIG. 12, a flow is illustrated.

### (S600)

In FIG. 13, inspection object 1 including the edge part 2 is illustrated. Inspection object 1 is configured by a measurement point cloud 14. An area A16 is set and a spherical surface is fitted on a point cloud included therein to calculate a curvature. In all areas in which the point cloud is present, the same work is repeatedly performed.

### (S601)

The threshold is provided and it is determined whether the curvature is equal to or more than γ, or equal to or less than γ.

### (S602)

A portion in which the curvature is equal to or more than γ is recognized to be the edge part.

### (S603)

A portion in which the curvature is less than γ is recognized to be the non-edge part.

From the above, according to the present embodiment, the non-edge part is measured by distance measuring unit 130, and the edge part is measured by the image pickup unit 120; thereby, the measurement having high accuracy can be performed in response to a shape of inspection object 1.

In should be noted that any of the above-described embodiments are merely concrete examples to implement the present invention, and it is to be understood that the technical scope of the present invention will not be construed restrictively by these embodiments. In other words, the present invention can be realized in various forms without departing from the technological spirit and the main features thereof.

### REFERENCE SIGNS LIST

- 1: Inspection object
- 2: Edge part
- 11: Measurement point
- 14: Measurement point cloud
- 16: Area A
- 101, 102: Holding mechanism
- 103: Servomotor
- 104: Motor controller
- 105: Base
- 106: X stage
- 107: Y stage
- 108: Goniostage
- 109: Stage controller
- 110: Vibration isolation surface plate
- 120: Image pickup unit
- 121: Illumination unit
- 122: Lens
- 123: Two-dimensional camera
- 124: Camera controller
- 130: Distance measuring unit
- 131: Non-contact distance measuring sensor
- 132: Sensor controller
- 140: PC for control
- 141: Monitor
- 142: Reference shape data
- 143: Database
- 144: Input device
- 150: Path setting unit
- 300: GUI
- 301: Shape data button
- 302: Display window
- 303: Sensor characteristics button
- 304: X minimum box
- 305: X maximum box
- 306: G minimum box
- 307: G maximum box
- 308, 309, 310, 311: Resolution box
- 312: Accuracy input box
- 313: Duplication rate input box
- 314: Measurement frequency input box
- 315: AUTO button
- 316: Path calculation button
- 1301, 1301a, 1301b, 1301c: Irradiation laser
- 1401: Point cloud integration unit
- 1402: Defect quantification unit
- 1403: Defect determination unit

## Claims

1. A shape inspection apparatus comprising:
a three-dimensional shape sensor that obtains shape data of an inspection target;
a path setting unit that sets a path through which a relative position of the three-dimensional shape sensor relative to the inspection target passes during inspection by using reference data representing the shape data of the inspection target; and
a driving unit that controls the relative position of the three-dimensional shape sensor relative to the inspection target.

2. The shape inspection apparatus according to claim 1, wherein
the path setting unit determines the relative position of the three-dimensional shape sensor relative to the inspection target so that a rate of meshes or point clouds capable of obtaining the shape data with necessary accuracy or more is more than a predetermined value.

3. The shape inspection apparatus according to claim 2, wherein
the three-dimensional shape sensor irradiates a laser beam on the inspection target, and thereby is a distance measuring sensor that measures a point cloud of the inspection target, and
when an angle formed by a laser beam irradiated from the distance measuring sensor and a surface to be inspected of the inspection target is equal to or more than a predetermined threshold, the path setting unit regards the angle as necessary accuracy or more.

4. The shape inspection apparatus according to claim 1, wherein
the path setting unit sets the path so that a moving amount of the relative position of the three-dimensional shape sensor relative to the inspection target is short.

5. The shape inspection apparatus according to claim 1, further comprising an integration unit that integrates a plurality of the shape data obtained by the three-dimensional shape sensor, on a path set by the path setting unit.

6. The shape inspection apparatus according to claim 5, wherein
the integration unit performs an integration of the shape data in which a rate of meshes or point clouds of overlap is more than a predetermined rate, among the plurality of the shape data obtained by the three-dimensional shape sensor.

7. The shape inspection apparatus according to claim 1, further comprising a two-dimensional camera that obtains the shape data of the inspection target, wherein
among the inspection targets, an edge part is obtained by the two-dimensional camera,
a non-edge part in which the edge part is excluded is obtained by the three-dimensional shape sensor, and
the path setting unit sets a path of a portion in which the edge part is excluded.

8. A shape inspection method comprising:
setting, by using reference data representing shape data of an inspection target, a path through which a relative position of a three-dimensional shape sensor relative to the inspection target passes during inspection;
controlling the relative position of the three-dimensional shape sensor relative to the inspection target so as to pass through the set path; and
obtaining the shape data of the inspection target by the three-dimensional shape sensor.

9. The shape inspection method according to claim 8, wherein
the path is set so that a rate of meshes or point clouds capable of obtaining the shape data with necessary accuracy or more is more than a predetermined value.

10. The shape inspection method according to claim 9, wherein
the three-dimensional shape sensor irradiates a laser beam on the inspection target, and thereby is a distance measuring sensor that measures a point cloud of the inspection target, and
when an angle formed by a laser beam irradiated from the distance measuring sensor and a surface to be inspected of the inspection target is equal to or more than a predetermined threshold, the angle is regarded as necessary accuracy or more.

11. The shape inspection method according to claim 9, wherein
the path is set so that a moving amount of the relative position of the three-dimensional shape sensor relative to the inspection target is shortest.

12. The shape inspection method according to claim 9, further comprising integrating on the set path a plurality of the shape data obtained by the three-dimensional shape sensor.

13. The shape inspection method according to claim 12, wherein
an integration of the shape data in which a rate of meshes or point clouds of overlap is more than a predetermined rate is performed among the plurality of the shape data obtained by the three-dimensional shape sensor.

14. The shape inspection method according to claim 8, further comprising:
obtaining the shape data of an edge part of the inspection target by a two-dimensional camera;
setting the path in a non-edge part in which the edge part of the inspection target is excluded and obtaining the shape data by the three-dimensional shape sensor; and
integrating the shape data obtained by the two-dimensional camera and the shape data obtained by the three-dimensional shape sensor.
